# EUROPEAN PATENT SPECIFICATION

(11) **EP 4 253 006 B1**
(45) Date of publication and mention of the grant of the patent: **25.02.2026**
(21) Application number: 22165280.3
(22) Date of filing: 29.03.2022
(51) Int. Cl.: B29C 64/118, B29C 64/393, B33Y 50/02

(54) **COMPUTER-IMPLEMENTED METHOD FOR GENERATING THERMALLY IMPROVED MACHINE CONTROL DATA FOR ADDITIVE MANUFACTURING MACHINES**
COMPUTERIMPLEMENTIERTES VERFAHREN ZUM ERZEUGEN VON THERMISCH VERBESSERTEN MASCHINENSTEUERDATEN FÜR MASCHINEN ZUR GENERATIVEN FERTIGUNG
PROCÉDÉ MIS EN OÉUVRE PAR ORDINATEUR POUR GÉNÉRER DES DONNÉES DE COMMANDE DE MACHINE THERMIQUEMENT AMÉLIORÉE POUR DES MACHINES DE FABRICATION ADDITIVE

(43) Date of publication of application: 04.10.2023
(73) Proprietor: Airbus Operations GmbH, 21129 Hamburg (DE)
(72) Inventor: Schubert, Konstantin, 21129 Hamburg (DE); Driezen, Jorne, 21129 Hamburg (DE)
(74) Representative: KASTEL Patentanwälte PartG mbB

(56) References cited:
- EP-A1- 3 549 746
- WO-A1-2020/247544
- CATTENONE ALBERTO ET AL: "Finite Element Analysis of Additive Manufacturing Based on Fused Deposition Modeling: Distortions Prediction and Comparison With Experimental Data", vol. 141, no. 1, 8 November 2018 (2018-11-08), US, XP055958260, ISSN: 1087-1357, Retrieved from the Internet <URL:http://asmedigitalcollection.asme.org/manufacturingscience/article-pdf/doi/10.1115/1.4041626/6278955/manu_141_01_011010.pdf> [retrieved on 20220907], DOI: 10.1115/1.4041626
- BI JING ET AL: "Finite Element Simulation of the Fused Deposition Modelling Process", 1 June 2017 (2017-06-01), XP055958273, Retrieved from the Internet <URL:https://www.researchgate.net/profile/Jing-Bi/publication/313819691_Finite_Element_Simulation_of_the_Fused_Deposition_Modelling_Process/links/59ea620f4585151983c7f042/Finite-Element-Simulation-of-the-Fused-Deposition-Modelling-Process.pdf> [retrieved on 20220906]
- DRIEZEN JORNE ET AL: "In-situ adaptive thermal simulation method for predicting and avoiding hotspots in material extrusion processes", RAPID PROTOTYPING JOURNAL, 2 August 2022 (2022-08-02), pages 1492 - 1508, XP055958085, Retrieved from the Internet <URL:https://www.emerald.com/insight/content/doi/10.1108/RPJ-10-2021-0272/full/pdf?title=in-situ-adaptive-thermal-simulation-method-for-predicting-and-avoiding-hotspots-in-material-extrusion-processes> [retrieved on 20220906], DOI: 10.1108/RPJ-10-2021-0272

## Description

The invention relates to additive manufacturing. Specifically the invention relates to a computer-implemented method for generating output machine control data for additive manufacturing machines.

WO 2018 / 217 903 A1 discloses a machine learning-based method for automated object defect classification and adaptive, real-time control of an additive manufacturing and/or welding processes.

WO 2019 070 644 A1 discloses a method for utilizing multicriteria optimization in simulating various parameters in additive manufacture to generate build instructions for an additive manufacture machine in view of conflicting objectives.

WO 2020 / 247 544 A1 discloses a method for selecting processing parameters for building an object by additive manufacturing. The processing parameters for the build are modified based on a 2D finite difference simulation for each layer.

Cattenone A. et al.: "Finite Element Analysis of Additive Manufacturing Based on Fused Deposition Modeling: Distortions Prediction and Comparison With Experimental Data", JOURNAL OF MANUFACTURING SCIENCE AND ENGINEERING, [Online] vol. 141, no. 1, 8 November 2018 (2018-11-08), XP055958260, US ISSN: 1087-1357, DOI: 10.1115/1.4041626, disclose a method for generating output machine control data that are adapted for causing an additive manufacturing machine to print an object by layering extruded material, the method comprising generating event series data from input machine control data, wherein the input machine control data are adapted for causing an additive manufacturing machine to print an object by layering extruded material; generating mesh data, wherein the mesh data include a plurality of mesh elements, and linking the mesh data with the event series data so as to determine an activation time for each mesh element, wherein the activation time is indicative of the point in time at which the additive manufacturing machine prints a portion of the object that is represented by that mesh element; determining the mesh elements that are to be activated in a next time step interval as the to-be-activated mesh elements; determining neighbor mesh elements of the to-be-activated mesh elements within a predetermined boundary; and determining an element temperature for the neighbor mesh elements.

Bi Jing et al.: Finite Element Simulation of the Fused Deposition Modelling Process", 1 June 2017 (2017-06-01), XP055958273, disclose a method for generating output machine control data that are adapted for causing an additive manufacturing machine to print an object by layering extruded material, the method comprising generating event series data from input machine control data, wherein the input machine control data are adapted for causing an additive manufacturing machine to print an object by layering extruded material; generating mesh data, wherein the mesh data include a plurality of mesh elements, and linking the mesh data with the event series data so as to determine an activation time for each mesh element, wherein the activation time is indicative of the point in time at which the additive manufacturing machine prints a portion of the object that is represented by that mesh element; determining the mesh elements that are to be activated in a next time step interval as the to-be-activated mesh elements; determining neighbor mesh elements of the to-be-activated mesh elements within a predetermined boundary; and determining an element temperature for the neighbor mesh elements.

EP 3 549 746 A1 and WO 2020 / 247 544 A1 disclose some adaption of key processing parameters during slicing, but not during manufacturing in real time.

It is the object of the invention to improve additive manufacturing. The object is achieved by the subject-matter of the independent claims. Advantageous embodiments are subject-matter of the dependent claims.

The invention provides a computer-implemented method for generating output machine control data that are adapted in-real time for causing an additive manufacturing machine to print an object by layering extruded material, the method comprising:
a) generating event series data from input machine control data, wherein the event series data include a plurality of events that are defined as a transition between two subsequent data lines of the input machine control data, wherein the input machine control data comprise a sequence of machine commands that are indicative of a target location of movement, print speed, and/or an amount of material extruded, wherein the event series data are generated from pairs of subsequent machine commands, wherein the input machine control data are adapted for causing an additive manufacturing machine to print an object by layering extruded material;
b) generating mesh data based on outer dimensional boundaries of the event series data, wherein the mesh data (30) include a plurality of mesh elements, and linking the mesh data with the event series data so as to determine an activation time for each mesh element, wherein the activation time is indicative of the point in time at which the additive manufacturing machine prints a portion of the object that is represented by that mesh element;
c) determining the mesh elements that are to be activated in a next time step interval as the to-be-activated mesh elements;
d) determining neighbor mesh elements of the to-be-activated mesh elements within a predetermined boundary, wherein the boundary is chosen such that at least one neighbor mesh element and at least one to-be-activated mesh element belong to a different printing layer;
e) determining an element temperature for the neighbor mesh elements;
f) if the element temperature exceeds or is below a predetermined temperature threshold, increasing or decreasing the activation time of each to-be-activated mesh element and updating the corresponding entries in the event series data, otherwise leave the activation time of each to-be-activated mesh element unchanged;
g) repeat steps c) to f) until step c) results in no more to-be-activated mesh elements to obtain updated event series data;
h) converting the updated event series data into the output machine control data such that the activation time according to the event series data is achieved by adapting the printing speed and/or by controlling a flow of pressurized air to impinge on the object; and/or such that the activation time according to the event series data is achieved by introducing machine commands into the output machine control data that cause the additive manufacturing machine to interrupt printing for a predetermined amount of time, while moving a hot end out of contact with the object.

Preferably, in step a) the input machine control data includes an indication of a target location of movement, print speed, and/or an amount of material extruded, and the event series data is generated based on one, some, or all of these indications.

Preferably, in step a) the input machine control data comprises a sequence of machine commands that are indicative of a target location of movement, print speed, and/or an amount of material extruded, wherein the event series data is generated from pairs of subsequent machine commands.

Preferably, in step b) for each mesh element, orientation data is generated and associated with the mesh element, wherein the orientation data is indicative of the orientation of the mesh element along the three principal directions based on the printing direction.

Preferably, the total printing time is divided into a plurality of time step intervals, and preferably in step c) the time step interval ranges from a step time to the step time plus a predetermined time increment.

Preferably, in step d) the boundary is chosen such that the neighbor mesh elements include at least one mesh element that is located below a to-be-activated mesh element.

Preferably, in step e) the element temperature is determined as an average temperature, a minimum temperature, a maximum temperature, a mean temperature, depending on a defect to be avoided.

Preferably, in step e) the element temperature is determined based on first conducted heat that gets transferred between adjacent neighbor mesh elements due to elapsed time.

Preferably, in step e) the element temperature is determined based on second conducted heat that gets introduced into the material represented by the neighbor mesh elements due to the activation of the to-be-activated mesh elements.

Preferably, in step e) the element temperature is determined based on convective heat that gets removed from the material represented by neighbor mesh elements due to convection.

Preferably, in step e) the element temperature is determined based on radiative heat that gets removed from the material represented by the neighbor mesh elements due to heat radiation.

Preferably, in step e) the element temperature is determined based on latent heat that is introduced to or removed from the material represented by the neighbor mesh elements due to a phase transition of that material.

Preferably, in step f), if the element temperature exceeds a predetermined temperature threshold, increasing the activation time of each to-be-activated mesh element and updating the corresponding entries in the event series data, otherwise leave the activation time of each to-be-activated mesh element unchanged.

Preferably, in step f), if the element temperature is below a predetermined temperature threshold, decreasing the activation time of each to-be-activated mesh element and updating the corresponding entries in the event series data, otherwise leave the activation time of each to-be-activated mesh element unchanged.

Preferably, in step h) the printing speed is increased for a decreased activation time.

Preferably, in step h) the printing speed is decreased for an increased activation time.

The invention relates to a computer program comprising instructions which, when the program is executed by a computer, cause the computer to carry out one, some, or all of the steps of a preferred method.

The invention relates to a data carrier or data carrier signal comprising the computer program.

The invention relates to a data processing apparatus comprising means for carrying out the preferred method.

The invention provides a method for additive manufacturing an object by layering extruded material, the method comprising:
a) performing a preferred method so as to obtain output machine control data;
b) printing the object by layering extruded material in a manner controlled by the output machine control data.

The invention provides an additive manufacturing apparatus comprising means for carrying out the preferred method.

The idea presented herein relates to the field of 3D printing. It is especially relevant for technologies working with high performance thermoplastics such as the material extrusion techniques; Fused Deposition Modelling (FDM), Fused Layer Modelling (FLM), Fused Filament Fabrication (FFF), Fused Composite Manufacturing (FCM) and Powder Bed Fusion techniques.

As shown in the prior art, thermal considerations are also relevant with regards to other 3D printing processes, such as Selective Laser Sintering (SLS), Direct Energy Deposition (DED) and Selective Laser Melting (SLM).

The relevant technologies have in common that heat is used to build a part layer-by-layer. The thermal history field usually determines the mechanical properties of the part and its performance as well as robustness and quality of the printed results. Some typical defects of prints with inappropriate settings include: hotspots, curling corners, delamination, blobs, degradation of the printing material, burnt surfaces and microscale defects.

The known solutions include generating a thermal simulation, analyzing the thermal behavior and adapting the geometry, key process parameters or orientations using multiple iterative experiments and simulations trials.

Current solutions are, however, limited to the use of 2D stacked layers, limiting the full potential of real three-dimensional printing. In other words, current approaches do not consider situations in which the print orientation is out of plane.

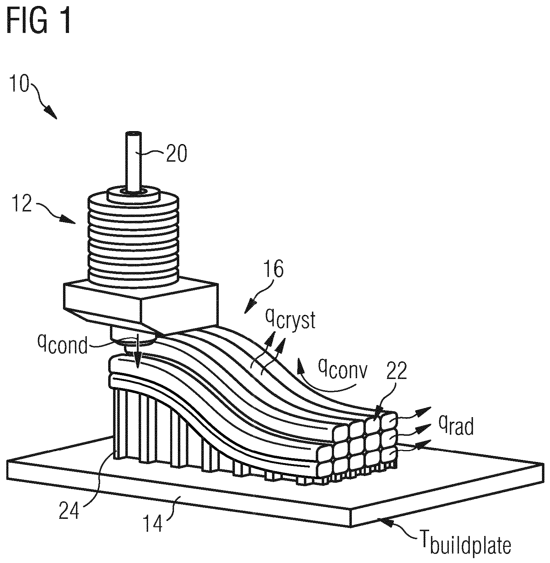

In contrast to the prior art, the ideas presented herein are able to be applied to full 3D capabilities, as exemplified by the curved layers in Fig. 1. It is also possible to determine the key process parameters in-situ needed for the printing process during a single simulation iteration.

With the measure disclosed herein trial and error experimentation for defining key process parameters of the 3D printing process can be avoided. The enabling of in-situ variation of the key process parameters during the process simulation and adapting the original machine code basically in real time, allows for a decreased design and sizing time. Furthermore, it is possible to ensure that the resulting machine code avoids thermal defects. Also the inter-layer adhesion between subsequent printed materials can be improved. Overall the invention allows to reduce effort needed for quality control of the parts without compromising reliability. In addition the amount of post-processing needed can be reduced.

The pre-processor reads the original machine code line-by-line and extracts the key data from the print job. Based on the location of movement, the print speed and the amount of material extruded, each pair of data lines is being converted into event series. Using the outer dimensional boundaries of the event series, layer height and line width of the printing process, a voxel mesh is being generated and built around the event series. Then, by aligning the event series with the mesh, the activation time and orientation for each of the elements is being calculated and saved into a data file.

In the thermal simulation, the data file is being read and elements are activated, if the time step in the simulation corresponds to the element activation time (t_act). For each time step the following steps are performed:
The coordinates of the 'to be' activated elements are identified. Based on these coordinates, a search location is defined within a boundary box. The size, location and geometry of the boundary box can be adapted to the purpose of the experimentation. The time steps can also be adapted to the experimentation.

In this example, the boundary box is defined as the elements directly below each of the activated elements. Depending on the amount of identified elements in the boundary box, the element temperature (or other conditions) are calculated and stored. The entries in the event series are adapted based on a specified condition, which in this example is to increase the activation time of the elements (t_act) with the step time (dtime).

Each time the condition is true, the respective layer, time and time increment are written to an external data file. The output from the simulation is then run into a post-processor, which adapts the original machine code accordingly and thereby generates a new machine code, which can be used to print the part without violating a threshold temperature during printing.

The method will be described as an example focused on the detection and avoidance of hotspots in the 3D printing process. However, it should be noted that the method is also applicable to other criteria, such as adapting the process parameters for improved inter-laminar properties, enhanced (and controlled) material crystallinity, decreased thermal deformations and other performance related results. In general, the idea may be seen as a method, which his implemented into a thermal process simulation tool, to vary the key process parameters of the printing process, in order to tweak the resulting thermal behavior of the part and therefore to allow control of its quality, mechanical properties, dimensional stability and/or process robustness.

Embodiments of the invention are described in more detail with reference to the accompanying schematic drawings that are listed below.
Fig. 1 partially depicts an additive manufacturing machine;
Fig. 2 depicts steps for generating activation time;
Fig. 3 depicts steps for determining the thermal properties of the mesh elements; and
Fig. 4 depicts an example of printing with updated machine control data.

Referring to Fig. 1 an embodiment of an additive manufacturing machine 10 is partially depicted. In a known manner, the additive manufacturing machine 10 comprises a hot end 12 that is movable relative to a build plate 14 to print an object 16. Feedstock 20, e.g. filament, is fed into the hot end 12 and subsequently extruded to form layered lines 22 that are fused together. In addition, a support structure 24 can be printed to support portions of the object 16 that could not be printed otherwise.

The additive manufacturing machine 10 is controlled by machine control data that are usually obtained by slicing a CAD model of the object. The slicing determines among others the locations, speeds, amount of extruded material with which the additive manufacturing machine 10 deposits extruded feedstock 20, as well as temperatures of the hot end 12 and the build plate 14.

However, so far the slicing does not take into account thermal considerations. In other words, it is possible that certain defects, e.g. hot spots, can be generated, if the object 16 has tapered portions, for example. In this case the heat introduced during printing the tapered portion can prevent the extruded feedstock material from cooling enough so that the next layer deposited causes a deformation. Other consequences may be curling corners, delamination, blobs, degradation of the printing material, burnt surfaces and microscale defects, which can be caused also due to too large amounts of heat entering the object 16.

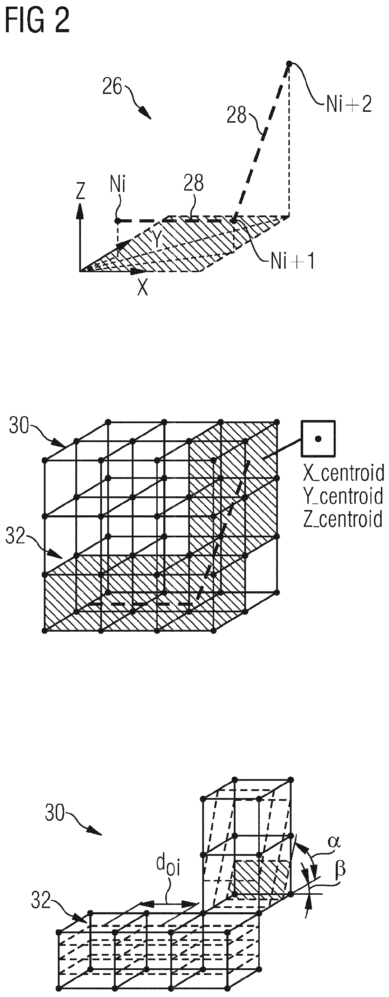

Referring to Fig. 2, top, input machine control data are fed into a pre-processor that extracts event series data 26. The input machine control data are organized in data lines represented as Nᵢ, Nᵢ₊₁, Nᵢ₊₂,... The data lines include machine commands that control the location of the hot end 12 and/or build plate 14, the printing speed, and/or the amount of extruded material.

The event series data 26 include a plurality of events 28 that are defined as a transition between two subsequent data lines.

As shown in Fig. 2, middle, mesh data 30 that includes a plurality of mesh elements 32 are generated based on the outer dimensional boundaries of the event series data 26. In an example, the mesh data 30 can be mesh data and the mesh elements 32 can be mesh elements. Other parameters of the event series data 26 such as layer height and/or line width of the printing process may also be used in generating the mesh data 30.

An activation time t_act for each mesh element 32 is determined by aligning the event series data 26 with the mesh data 30. The activation time t_act is indicative of the point in time at which the additive manufacturing machine 10 prints a portion of the object 16 that is represented by that mesh element 32.

As shown in Fig. 2, bottom, the orientation, e.g. directional cosines of α, β, of mesh elements 32 along the components of the three principal directions x, y, z based on the print direction can also be determined. With this the orthotropy of the printing process can be taken into account and anisotropic material properties can be assigned to each mesh element 32.

After the above described pre-processing step, the preprocessed output data, i.e. the preprocessed event series data 26, preferably includes an index value or count value, a mesh element number, orientation angles α, β, γ, the activation time t_act, xyz coordinates of the mesh element 32 and/or a new layer flag. The new layer flag indicates that a new printing layer starts with this mesh element 32 and all subsequent entries of mesh elements 32 are considered part of the same layer, until another new layer flag is set.

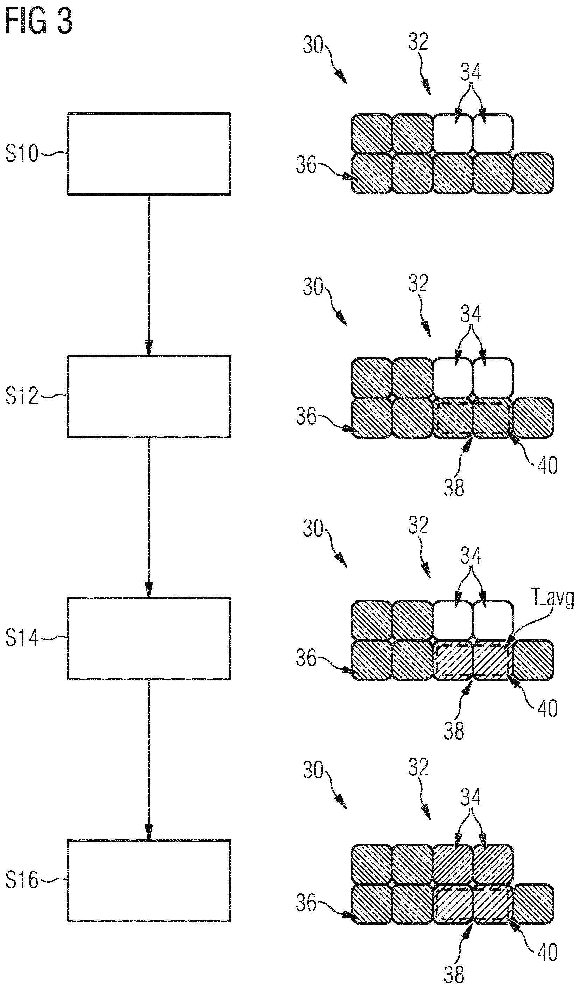

Fig. 3 exemplifies further processing of the preprocessed event series data 26 in a thermal simulation.

In an initial step S10, those mesh elements 32 that are to be activated next, i.e. the to-be-activated mesh elements 34 are determined based on the previously determined activation time t_act. The already activated mesh elements 36 are also shown.

In other words, in this step it is determined which portion of the object 16 that is represented by the to-be-activated mesh elements 34 is printed next within a predetermined time interval. The time interval ranges from a current step time to the current step time plus a predetermined time increment. These values are chosen such that they are suitable for the used additive manufacturing machine 10.

In a search step S12, at least one neighbor mesh element 38 is determined. The neighbor mesh element 38 is chosen within a predetermined boundary 40. Here, as an example, the boundary is given by the activated mesh elements 36 that are adjacent below the to-be-activated mesh elements 34. It should be noted that other boundary shapes may be chosen, e.g. all adjacent mesh elements.

In a thermal simulation step S14, the element temperature T_el, of the neighbor mesh elements 38 is determined. In determining the element temperature T_el, different heat contributions that influence the element temperature T_el are taken into account.

A first conducted heat that gets transferred between adjacent neighbor mesh elements due to elapsed time is taken into account. This would be the usual averaging.

Furthermore, a second conducted heat q_cond (Fig. 1) can be taken into account. The second conducted heat q_cond is introduced into the material represented by the neighbor mesh elements 38 due to the activation of the to-be-activated mesh elements 34. In other words, the second conducted heat q_cond takes into account the increase in temperature due to the new extruded material deposited onto the existing layers.

Also, a convective heat q_conv (Fig. 1) can be used. The convective heat q_conv gets removed from the material represented by neighbor mesh elements 38 due to convection. In general the convective heat q_conv represents the printing environment and heat flow into the environment. The convective heat q_conv may in particular be based on active cooling or a temperature controlled build space for example.

Furthermore, radiative heat q_rad (Fig. 1) can be used in determining the element temperature T_el. The radiative heat q_rad is removed from the material represented by the neighbor mesh elements due to heat radiation. The radiative heat q_rad can also be determined based on the orientation of the neighbor mesh elements thereby giving a better estimate of the area radiating.

Finally, latent heat q_cryst (Fig. 1) can be used in determining the element temperature T_el. Latent heat q_cryst is introduced to or removed from the material represented by the neighbor mesh elements 38 due to a (first order) phase transition of that material. For example, if the print material is at least partially crystalline, the latent heat released from formation or absorbed for dissolution of the crystallites can be taken into account.

In a modification step S16, the element temperature T_el previously determined is compared with a predetermined temperature threshold. The temperature threshold is chosen based on the defects that are to be avoided. Here, as an example, the temperature threshold is chosen so as to avoid overheating and thereby allowing preservation of the geometric dimensions of the object 16 under print.

If the element temperature T_el is determined to exceed the temperature threshold, then the activation time t_act of the to-be-activated mesh elements 34 is increased, preferably by a predetermined time increment.

This process is repeated until there are no more to-be-activated mesh elements 34. In other words the process is repeated until the whole object 16 was thermally simulated once and only once.

The event series data 26 are constantly updated during this process, in particular with modified activation times t_act, wherever the temperature threshold is exceeded.

In a last step, the updated event series data 26 are converted to output machine control data that include machine commands.

One option to achieve an increased activation time t_act is implementation of a wait signal in which the hot end 12 moves away from the object 16 and waits for a certain amount of time determined by the activation times t_act.

Another option is to decrease the print speed to ensure that the hot end 12 will reach the target location at the original time (i.e. the one that would cause overheating) plus the wait time (i.e. the time added to avoid said overheating).

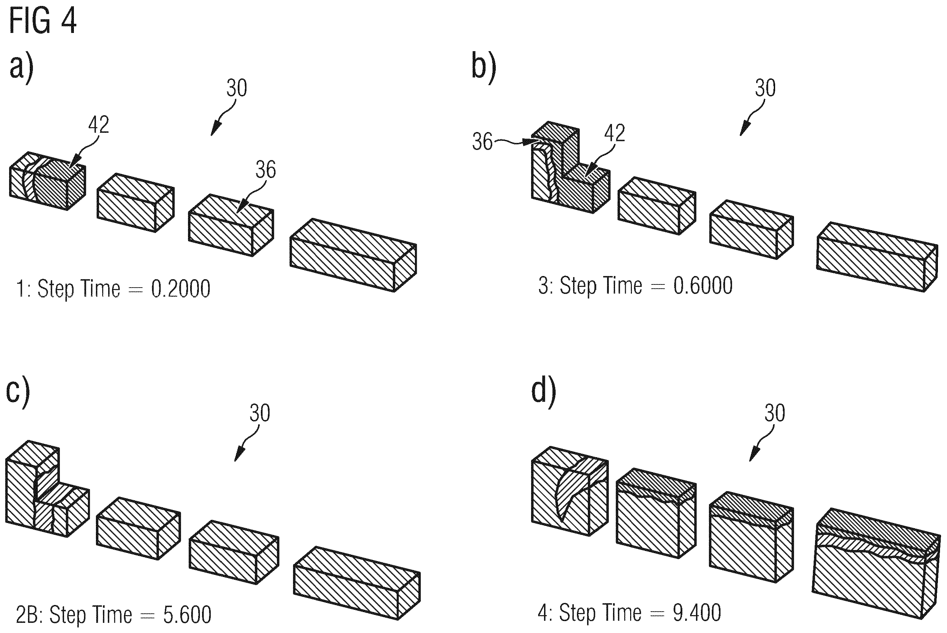

Fig. 4 shows how the results of the thermal simulation translate into the output machine control data.

Fig. 4 a) shows a hot spot 42 in an otherwise regular layer.

Fig. 4 b) shows a just printed portion of the object 16 comprising activated mesh elements 36 in the next layer.

Fig. 4 c) shows the situation after a wait time of five seconds. The hot spot 42 has dissipated.

Fig. 4 d) shows the situation after finishing the next layer. The mesh elements 32 of this layer are now all activated mesh elements 36.

The respective layer, time, and time increment are written to an external data file each time the utility routine is called and the condition is true.

The implemented waiting signals in the simulation allow the material to cool.

Applicant conducted experiments with an off-the-shelf Ultimaker S5 as a validation platform in which the boundary conditions were calibrated, neglecting unknown parameters in the process. The validation was conducted by printing a wall and recording the temperature history using an IR camera to determine the most efficient option (i.e. the highest cooling rate). For this, two walls were printed in series with the same total print time as a single wall to mimic a waiting signal.

The results show that decreasing the print speed is more efficient and can likely be explained by the constant cooling of the fan directly on the part. Considering that a printing process without travel movements and stops results in a more aesthetic and accurate result, reduction of print speed is the more advantageous option.

In order to improve additive manufacturing, in particular with respect to thermal considerations, a method for generating improved machine control data is proposed. Initially and event series (26) is generated from input machine control data that is linked with a mesh mesh (30) that is also generated from the input machine control data. Thus, an activation time (t_act) is determined which indicates the point in time at which the additive manufacturing machine (10) prints a portion of the object (16) that is represented by that mesh element (32). A full 3D-thermal simulation is run on the mesh elements (32). Each time the element temperature (T_el) exceeds a predetermined threshold, the activation time (t_act) is increased by a predetermined time increment and the event series (26) is updated. Finally the event series (26) is converted back to output machine control data.

### List of reference signs:

10 additive manufacturing machine
12 hot end
14 build plate
16 object
20 feedstock
22 layered line
24 support structure
26 event series data
28 event
30 mesh data
32 mesh element
34 to-be-activated mesh element
36 activated mesh element
38 neighbor mesh element
40 boundary
42 hot spot

## Claims

1. A computer-implemented method for generating output machine control data that are adapted in real-time for causing an additive manufacturing machine (10) to print an object (16) by layering extruded material, the method comprising:
a) generating event series data (26) from input machine control data, wherein the event series data (26) include a plurality of events (28) that are defined as a transition between two subsequent data lines of the input machine control data, wherein the input machine control data comprise a sequence of machine commands that are indicative of a target location of movement, print speed, and/or an amount of material extruded, wherein the event series data (26) are generated from pairs of subsequent machine commands, wherein the input machine control data are adapted for causing an additive manufacturing machine (10) to print an object (16) by layering extruded material;
b) generating mesh data (30) based on outer dimensional boundaries of the event series data (26), wherein the mesh data (30) include a plurality of mesh elements (32), and linking the mesh data (30) with the event series data (26) so as to determine an activation time (t_act) for each mesh element (32), wherein the activation time (t_act) is indicative of the point in time at which the additive manufacturing machine (10) prints a portion of the object (16) that is represented by that mesh element (32);
c) determining the mesh elements (32) that are to be activated in a next time step interval as the to-be-activated mesh elements (34);
d) determining neighbor mesh elements (38) of the to-be-activated mesh elements (34) within a predetermined boundary (40), wherein the boundary (40) is chosen such that at least one neighbor mesh element (38) and at least one to-be-activated mesh element (34) belong to a different printing layer;
e) determining an element temperature (T_el) for the neighbor mesh elements (38);
f) if the element temperature (T_el) exceeds or is below a predetermined temperature threshold, increasing or decreasing the activation time (t_act) of each to-be-activated mesh element (34) and updating the corresponding entries in the event series data (26), otherwise leave the activation time (t_act) of each to-be-activated mesh element (34) unchanged;
g) repeat steps c) to f) until step c) results in no more to-be-activated mesh elements (34) to obtain updated event series data (26);
h) converting the updated event series data (26) into the output machine control data such that the activation time (t_act) according to the event series data (26) is achieved by adapting the printing speed and/or by controlling a flow of pressurized air to impinge on the object (16); and/or such that the activation time (t_act) according to the event series data (26) is achieved by introducing machine commands into the output machine control data that cause the additive manufacturing machine (10) to interrupt printing for a predetermined amount of time, while moving a hot end (12) out of contact with the object (16).

2. The method according to claim 1, wherein in step a) the input machine control data includes an indication of a target location of movement, print speed, and/or an amount of material extruded, and the event series data (26) is generated based on one, some, or all of these indications.

3. The method according to any of the preceding claims, wherein in step b) for each mesh element (32), orientation data is generated and associated with the mesh element (32), wherein the orientation data is indicative of the orientation of the mesh element (32) along the three principal directions based on the printing direction.

4. The method according to any of the preceding claims, wherein in step d) the boundary (40) is chosen such that the neighbor mesh elements (38) include at least one mesh element (32) that is located below a to-be-activated mesh element (34).

5. The method according to any of the preceding claims, wherein in step e) the element temperature (T_el) is determined as an average temperature, a minimum temperature, a maximum temperature, a mean temperature, depending on a defect to be avoided.

6. The method according to any of the preceding claims, wherein in step e) the element temperature (T_el) is determined based on any of
a) first conducted heat that gets transferred between adjacent neighbor mesh elements (38) due to elapsed time; and/or
b) second conducted heat (q_cond) that gets introduced into the material represented by the neighbor mesh elements (38) due to the activation of the to-be-activated mesh elements (34); and/or
c) convective heat (q_conv) that gets introduced to or removed from the material represented by neighbor mesh elements (38) due to convection; and/or
d) radiative heat (q_rad) that gets removed from the material represented by the neighbor mesh elements (38) due to heat radiation; and/or
e) latent heat (q_cryst) that is introduced to or removed from the material represented by the neighbor mesh elements (38) due to a phase transition of that material.

7. The method according to any of the preceding claims, wherein in step f), if the element temperature (T_el) exceeds a predetermined temperature threshold, increasing the activation time (t_act) of each to-be-activated mesh element (34) and updating the corresponding entries in the event series data (26), otherwise leave the activation time (t_act) of each to-be-activated mesh element (34) unchanged.

8. The method according to any of the preceding claims, wherein in step f), if the element temperature (T_el) is below a predetermined temperature threshold, decreasing the activation time (t_act) of each to-be-activated mesh element (34) and updating the corresponding entries in the event series data (26), otherwise leave the activation time (t_act) of each to-be-activated mesh element (34) unchanged.

9. The method according to any of the preceding claims, wherein in step h) the printing speed is increased for a decreased activation time (t_act); and/or wherein in step h) the printing speed is decreased for an increased activation time (t_act).

10. A computer program comprising instructions which, when the program is executed by a computer, cause the computer to carry out the steps of a method according to any of the preceding claims.

11. A data carrier or data carrier signal comprising the computer program of claim 10.

12. A data processing apparatus comprising means for carrying out the method of any of the preceding method claims.

13. A method for additive manufacturing an object by layering extruded material, the method comprising:
a) performing a method according to any of the claims 1 to 9 so as to obtain output machine control data;
b) printing the object by layering extruded material in a manner controlled by the output machine control data.

14. An additive manufacturing apparatus (10) comprising means for carrying out the method of claim 13.

## Patentansprüche

1. Computerimplementiertes Verfahren zum Erzeugen von Ausgabemaschinensteuerdaten, die in Echtzeit angepasst werden, um zu bewirken, dass eine Maschine zur generativen Fertigung (10) ein Objekt (16) durch Schichten von extrudiertem Material druckt, wobei das Verfahren umfasst:
a) Erzeugen von Ereignisreihendaten (26) aus Eingabemaschinensteuerdaten, wobei die Ereignisreihendaten (26) eine Vielzahl von Ereignissen (28) einschließen, die als ein Übergang zwischen zwei aufeinanderfolgenden Datenzeilen der Eingabemaschinensteuerdaten definiert sind, wobei die Eingabemaschinensteuerdaten eine Folge von Maschinenbefehlen umfassen, die einen Zielbewegungsort, eine Druckgeschwindigkeit und/oder eine Menge an extrudiertem Material angeben, wobei die Ereignisreihendaten (26) aus Paaren von aufeinanderfolgenden Maschinenbefehlen erzeugt werden, wobei die Eingabemaschinensteuerdaten angepasst werden, um zu bewirken, dass eine Maschine zur generativen Fertigung (10) ein Objekt (16) durch Schichten von extrudiertem Material druckt;
b) Erzeugen von Mesh-Daten (30) basierend auf äußeren Dimensionsgrenzen der Ereignisreihendaten (26), wobei die Mesh-Daten (30) eine Vielzahl von Mesh-Elementen (32) einschließen, und Verknüpfen der Mesh-Daten (30) mit den Ereignisreihendaten (26), um eine Aktivierungszeit (t_act) für jedes Mesh-Element (32) zu bestimmen, wobei die Aktivierungszeit (t_act) den Zeitpunkt angibt, zu dem die Maschine zur generativen Fertigung (10) einen Abschnitt des Objekts (16) druckt, der durch dieses Mesh-Element (32) repräsentiert wird;
c) Bestimmen der Mesh-Elemente (32), die in einem nächsten Zeitschrittintervall aktiviert werden sollen, als die zu aktivierenden Mesh-Elemente (34);
d) Bestimmen von Nachbar-Mesh-Elementen (38) der zu aktivierenden Mesh-Elemente (34) innerhalb einer vorbestimmten Grenze (40), wobei die Grenze (40) derart gewählt ist, dass mindestens ein Nachbar-Mesh-Element (38) und mindestens ein zu aktivierendes Mesh-Element (34) zu einer anderen Druckschicht gehören;
e) Bestimmen einer Elementtemperatur (T_el) für die Nachbar-Mesh-Elemente (38);
f) wenn die Elementtemperatur (T_el) einen vorbestimmten Temperaturschwellenwert überschreitet oder darunter liegt, Erhöhen oder Verringern der Aktivierungszeit (t_act) jedes zu aktivierenden Mesh-Elements (34) und Aktualisieren der entsprechenden Einträge in den Ereignisreihendaten (26), andernfalls Unverändertlassen der Aktivierungszeit (t_act) jedes zu aktivierenden Mesh-Elements (34);
g) Wiederholen der Schritte c) bis f), bis Schritt c) zu nicht mehr zu aktivierenden Mesh-Elementen (34) führt, um aktualisierte Ereignisreihendaten (26) zu erhalten;
h) Umwandeln der aktualisierten Ereignisreihendaten (26) in die Ausgabemaschinensteuerdaten derart, dass die Aktivierungszeit (t_act) gemäß den Ereignisreihendaten (26) durch Anpassen der Druckgeschwindigkeit und/oder durch Steuern eines Druckluftstroms, sodass dieser auf das Objekt (16) auftrifft, erreicht wird; und/oder derart, dass die Aktivierungszeit (t_act) gemäß den Ereignisreihendaten (26) durch Einführen von Maschinenbefehlen in die Ausgabemaschinensteuerdaten erreicht wird, die bewirken, dass die Maschine zur generativen Fertigung (10) das Drucken für eine vorbestimmte Zeitdauer unterbricht, während ein heißes Ende (12) außer Kontakt mit dem Objekt (16) bewegt wird.

2. Verfahren nach Anspruch 1, wobei in Schritt a) die Eingabemaschinensteuerdaten eine Angabe eines Zielbewegungsorts, einer Druckgeschwindigkeit und/oder einer Menge an extrudiertem Material einschließen und die Ereignisreihendaten (26) basierend auf einer, einigen oder allen dieser Angaben erzeugt werden.

3. Verfahren nach einem der vorhergehenden Ansprüche, wobei in Schritt b) für jedes Mesh-Element (32) Orientierungsdaten erzeugt und mit dem Mesh-Element (32) assoziiert werden, wobei die Orientierungsdaten die Orientierung des Mesh-Elements (32) entlang der drei Hauptrichtungen basierend auf der Druckrichtung angeben.

4. Verfahren nach einem der vorhergehenden Ansprüche, wobei in Schritt d) die Grenze (40) derart gewählt wird, dass die Nachbar-Mesh-Elemente (38) mindestens ein Mesh-Element (32) einschließen, das sich unter einem zu aktivierenden Mesh-Element (34) befindet.

5. Verfahren nach einem der vorhergehenden Ansprüche, wobei in Schritt e) die Elementtemperatur (T_el) in Abhängigkeit von einem zu vermeidenden Defekt als eine durchschnittliche Temperatur, eine minimale Temperatur, eine maximale Temperatur, eine mittlere Temperatur bestimmt wird.

6. Verfahren nach einem der vorhergehenden Ansprüche, wobei in Schritt e) die Elementtemperatur (T_el) basierend auf einem bestimmt wird von
a) einer ersten geleiteten Wärme, die aufgrund verstrichener Zeit zwischen angrenzenden Nachbar-Mesh-Elementen (38) übertragen wird; und/oder
b) einer zweiten geleiteten Wärme (q_gel), die aufgrund der Aktivierung der zu aktivierenden Mesh-Elemente (34) in das durch die Nachbar-Mesh-Elemente (38) repräsentierte Material eingeführt wird; und/oder
c) Konvektionswärme (q_Konv), die aufgrund von Konvektion in das durch Nachbar-Mesh-Elemente (38) repräsentierte Material eingeführt oder daraus entfernt wird; und/oder
d) Strahlungswärme (q_Strahl), die aufgrund von Wärmestrahlung aus dem Material, das durch die Nachbar-Mesh-Elemente (38) repräsentiert wird, entfernt wird; und/oder
e) latenter Wärme (q_Krist), die aufgrund eines Phasenübergangs dieses Materials in das durch die Nachbar-Mesh-Elemente (38) repräsentierte Material eingeführt oder aus diesem entfernt wird.

7. Verfahren nach einem der vorhergehenden Ansprüche, wobei in Schritt f), wenn die Elementtemperatur (T_el) einen vorbestimmten Temperaturschwellenwert überschreitet, Erhöhen der Aktivierungszeit (t_act) jedes zu aktivierenden Mesh-Elements (34) und Aktualisieren der entsprechenden Einträge in den Ereignisreihendaten (26), andernfalls Unverändertlassen der Aktivierungszeit (t_act) jedes zu aktivierenden Mesh-Elements (34).

8. Verfahren nach einem der vorhergehenden Ansprüche, wobei in Schritt f), wenn die Elementtemperatur (T_el) unter einem vorbestimmten Temperaturschwellenwert liegt, Verringern der Aktivierungszeit (t_act) jedes zu aktivierenden Mesh-Elements (34) und Aktualisieren der entsprechenden Einträge in den Ereignisreihendaten (26), andernfalls Unverändertlassen der Aktivierungszeit (t_act) jedes zu aktivierenden Mesh-Elements (34).

9. Verfahren nach einem der vorhergehenden Ansprüche, wobei in Schritt h) die Druckgeschwindigkeit für eine verringerte Aktivierungszeit (t_act) erhöht wird und/oder wobei in Schritt h) die Druckgeschwindigkeit für eine erhöhte Aktivierungszeit (t_act) verringert wird.

10. Computerprogramm, das Anweisungen umfasst, die bei Ausführung des Programms durch einen Computer den Computer dazu veranlassen, die Schritte eines Verfahrens nach einem der vorhergehenden Ansprüche auszuführen.

11. Datenträger oder Datenträgersignal, der/das das Computerprogramm nach Anspruch 10 umfasst.

12. Datenverarbeitungseinrichtung, die Mittel zum Ausführen des Verfahrens nach einem der vorhergehenden Verfahrensansprüche umfasst.

13. Verfahren zur generativen Fertigung eines Objekts durch Schichten von extrudiertem Material, wobei das Verfahren umfasst:
a) Durchführen eines Verfahrens nach einem der Ansprüche 1 bis 9, um Ausgabemaschinensteuerdaten zu erhalten;
b) Drucken des Objekts durch Schichten von extrudiertem Material in einer durch die Ausgabemaschinensteuerdaten gesteuerten Weise.

14. Einrichtung zur generativen Fertigung (10), die Mittel zum Ausführen des Verfahrens nach Anspruch 13 umfasst.

## Revendications

1. Procédé mis en œuvre par ordinateur pour générer des données de contrôle de machine de sortie qui sont adaptées en temps réel pour amener une machine de fabrication d'additif (10) à imprimer un objet (16) par stratification d'un matériau extrudé, le procédé comprenant :
a) la génération de données de série d'événements (26) à partir de données de contrôle de machine d'entrée, dans lequel les données de série d'événements (26) comprennent une pluralité d'événements (28) qui sont définis comme une transition entre deux lignes de données ultérieures des données de contrôle de machine d'entrée, dans lequel les données de contrôle de machine d'entrée comprennent une séquence de commandes de machine qui sont indicatives d'un emplacement de mouvement cible, d'une vitesse d'impression et/ou d'une quantité de matériau extrudé, dans lequel les données de série d'événements (26) sont générées à partir de paires de commandes de machines ultérieures, dans lequel les données de contrôle de machine d'entrée sont adaptées pour amener une machine de fabrication d'additif (10) à imprimer un objet (16) par stratification d'un matériau extrudé ;
b) la génération de données de maillage (30) basées sur des limites dimensionnelles externes des données de série d'événements (26), dans lequel les données de maillage (30) comprennent une pluralité d'éléments de maillage (32), et la liaison des données de maillage (30) aux données de série d'événements (26) de façon à déterminer un temps d'activation (t_act) pour chaque élément de maillage (32), dans lequel le temps d'activation (t_act) est indicatif du moment où la machine de fabrication d'additif (10) imprime une partie de l'objet (16) qui est représentée par cet élément de maillage (32) ;
c) la détermination des éléments de maillage (32) qui doivent être activés dans un intervalle d'étape de temps suivant en tant qu'éléments de maillage à activer (34) ;
d) la détermination d'éléments de maillage voisins (38) des éléments de maillage à activer (34) à l'intérieur d'une limite (40) prédéterminée, dans lequel la limite (40) est choisie de sorte qu'au moins un élément de maillage voisin (38) et au moins un élément de maillage à activer (34) appartiennent à une couche d'impression différente ;
e) la détermination d'une température d'élément (T_el) pour les éléments de maillage voisins (38) ;
f) si la température d'élément (T_el) dépasse ou est au-dessous d'un seuil de température prédéterminé, augmenter ou diminuer le temps d'activation (t_act) de chaque élément de maillage à activer (34) et mettre à jour les entrées correspondantes dans les données de série d'événements (26), sinon laisser inchangé le temps d'activation (t_act) de chaque élément de maillage à activer (34) ;
g) la répétition des étapes c) à f) jusqu'à l'étape c) entraîne qu'il n'y a plus d'éléments de maillage à activer (34) pour obtenir des données de série d'événements (26) mises à jour ;
h) la conversion des données de série d'événements (26) mises à jour en données de contrôle de machine de sortie de sorte que le temps d'activation (t_act) en fonction des données de série d'événements (26) est atteint en adaptant la vitesse d'impression et/ou en contrôlant un flux d'air sous pression pour impacter l'objet (16) ; et/ou de sorte que le temps d'activation (t_act) en fonction des données de série d'événements (26) est atteint en introduisant des commandes de machine dans les données de contrôle de machine de sortie qui amènent la machine de fabrication d'additif (10) à interrompre l'impression pendant une quantité de temps prédéterminée, tout en déplaçant une extrémité chaude (12) hors de contact avec l'objet (16).

2. Procédé selon la revendication 1, dans lequel dans l'étape a) les données de contrôle de machine d'entrée comprennent une indication d'un emplacement de mouvement cible, d'une vitesse d'impression et/ou d'une quantité de matériau extrudé et les données de série d'événements (26) sont générées sur la base d'une, de certaines ou de la totalité de ces indications.

3. Procédé selon l'une quelconque des revendications précédentes, dans lequel dans l'étape b) pour chaque élément de maillage (32), des données d'orientation sont générées et associées à l'élément de maillage (32), dans lequel les données d'orientation sont indicatives de l'orientation de l'élément de maillage (32) le long des trois directions principales sur la base de la direction d'impression.

4. Procédé selon l'une quelconque des revendications précédentes, dans lequel dans l'étape d) la limite (40) est choisie de sorte que les éléments de maillage voisins (38) comprennent au moins un élément de maillage (32) qui est situé au-dessous d'un élément de maillage à activer (34).

5. Procédé selon l'une quelconque des revendications précédentes, dans lequel dans l'étape e) la température d'élément (T_el) est déterminée en tant que température standard, température minimum, température maximum, température moyenne, en fonction d'un défaut à éviter.

6. Procédé selon l'une quelconque des revendications précédentes, dans lequel dans l'étape e) la température d'élément (T_el) est déterminée sur la base de l'une quelconque de :
a) une première chaleur conduite qui est transférée entre des éléments de maillage voisins adjacents (38) en raison du temps écoulé ; et/ou
b) une seconde chaleur conduite (q_cond) qui est introduite dans le matériau représenté par les éléments de maillage voisins (38) en raison de l'activation des éléments de maillage à activer (34) ; et/ou
c) une chaleur convective (q_conv) qui est introduite ou retirée du matériau représenté par des éléments de maillage voisins (38) en raison de la convection ; et/ou
d) une chaleur radiative (q_rad) qui est retirée du matériau représenté par les éléments de maillage voisins (38) en raison du rayonnement thermique ; et/ou
e) une chaleur latente (q_cryst) qui est introduite ou retirée du matériau représenté par les éléments de maillage voisins (38) en raison d'une transition de phase de ce matériau.

7. Procédé selon l'une quelconque des revendications précédentes, dans lequel dans l'étape f), si la température d'élément (T_el) dépasse un seuil de température prédéterminé, augmenter le temps d'activation (t_act) de chaque élément de maillage à activer (34) et mettre à jour les entrées correspondantes dans les données de série d'événements (26), sinon laisser inchangé le temps d'activation (t_act) de chaque élément de maillage à activer (34).

8. Procédé selon l'une quelconque des revendications précédentes, dans lequel dans l'étape f), si la température d'élément (T_el) est au-dessous d'un seuil de température prédéterminé, diminuer le temps d'activation (t_act) de chaque élément de maillage à activer (34) et mettre à jour les entrées correspondantes dans les données de série d'événements (26), sinon laisser inchangé le temps d'activation (t_act) de chaque élément de maillage à activer (34).

9. Procédé selon l'une quelconque des revendications précédentes, dans lequel dans l'étape h) la vitesse d'impression est accrue pendant un temps d'activation diminué (t_act) ; et/ou dans lequel dans l'étape h) la vitesse d'impression est diminuée pendant un temps d'activation accru (t_act).

10. Programme d'ordinateur comprenant des instructions qui, lorsque le programme est exécuté par un ordinateur, amènent l'ordinateur à effectuer les étapes d'un procédé selon l'une quelconque des revendications précédentes.

11. Porteuse de données ou signal porteur de données comprenant le programme d'ordinateur selon la revendication 10.

12. Appareil de traitement de données comprenant des moyens pour effectuer le procédé selon l'une quelconque des revendications précédentes du procédé.

13. Procédé de fabrication d'additif d'un objet par stratification de matériau extrudé, le procédé comprenant :
a) l'exécution d'un procédé selon l'une quelconque des revendications 1 à 9 de façon à obtenir des données de contrôle de machine de sortie ;
b) l'impression de l'objet par stratification de matériau extrudé d'une manière contrôlée par les données de contrôle de machine de sortie.

14. Appareil de fabrication d'additif (10) comprenant des moyens pour effectuer le procédé selon la revendication 13.
